# EUROPÄISCHE PATENTSCHRIFT

(11) **EP 0 892 242 B1**
(45) Veröffentlichungstag und Bekanntmachung des Hinweises auf die Patenterteilung: **20.11.2002**
(21) Anmeldenummer: 98112675.8
(22) Anmeldetag: 08.07.1998
(51) Int. Cl.: G01B 5/00, G01B 5/255, G01M 17/007

(54) **Vorrichtung zur Lagerung von zwei Kraftfahrzeugrad-Rollen, insbesondere zur Messung der Radstellung**
Two rolls lodging device for vehicle wheel particularly for measuring wheel position
Dispositif pour loger deux rouleaux de roue de véhicule, en particulier pour mesurer la position des roues

(30) Priorität: 16.07.1997 DE 19730524
(43) Veröffentlichungstag der Anmeldung: 20.01.1999
(73) Patentinhaber: Snap-On Equipment GmbH, 64319 Pfungstadt (DE)
(72) Erfinder: Boess, Walther, 68649 Gross-Rohrheim (DE)
(74) Vertreter: Nöth, Heinz, Dipl.-Phys.

(56) Entgegenhaltungen:
- EP-A- 0 199 913
- EP-A- 0 438 866
- DE-A- 3 446 358
- DE-A- 3 830 229
- US-A- 4 953 391

## Beschreibung

Die Erfindung betrifft eine Vorrichtung nach dem Oberbegriff des Patentanspruches 1.

Eine derartige aus der EP 0 199 913 bekannte Vorrichtung besitzt zwei parallel in einem Rahmen drehbar gelagerte Rollen, auf die ein Kraftfahrzeugrad in einer Meßanordnung, insbesondere zur Messung seiner Radstellung, an einem Fahrzeug aufsetzbar ist. Ferner ist eine Rollkörper aufweisende Lagereinrichtung für eine schwimmende Lagerung bzw. Bewegung des Rahmens in einer horizontalen Ebene an einem Grundkörper vorgesehen, wobei die Rollkörper am Rahmen in festen Positionen angeordnet sind und der Rahmen über die Rollkörper an einer ebenen horizontalen Grundfläche, welche am Grundkörper vorgesehen ist, abgestützt ist. Ferner besitzt die bekannte Vorrichtung eine Bewegungsbegrenzungseinrichtung in Form eines in den als Platte ausgebildeten Grundkörper eingeformten Schlitzes, in welchen eine am Rahmen befestigte Schwenkachse ragt.

Aus der EP 0 376 037 A1 ist ebenfalls eine derartige Vorrichtung bekannt, wobei die Rollkörper als Rollkugeln ausgebildet sein können und der Rahmen am Grundkörper durch Zylinder betätigte Füße zur Überwindung der Rollkörperlagerung abgestützt werden kann. Ferner besitzt diese bekannte Vorrichtung einen mit dem Rahmen verbundenen Handhebel, mit welchem der Rahmen und die daran gelagerten Rollen vom Grundkörper für den Transport entfernt werden können.

Aufgabe der Erfindung ist es, eine Vorrichtung der eingangs genannten Art zu schaffen, mit welcher bei flexibler Einsetzbarkeit eine vereinfachte Handhabung gewährleistet ist.

Diese Aufgabe wird erfindungsgemäß durch die kennzeichnenden Merkmale des Patentanspruches 1 gelöst.

Hieraus resultiert ein zusammenhängender Aufbau der Vorrichtung, die auch als Einheit, welche aus dem Rahmen, den darin gelagerten Rollen und dem Grundkörper besteht, transportabel in unterschiedlichen Meßanordnungen, insbesondere Meßständen, zum Einsatz kommen kann.

In bevorzugter Weise ist der Rahmen, in welchem die beiden Rollen drehbar gelagert sind, als starre Platte ausgebildet. Die bevorzugt als Kugelrollen ausgebildeten Rollkörper können in einem Kugelkäfig, welcher am Rahmen befestigt ist, bevorzugt auf einem Kreis angeordnet sein. Der Mittelpunkt des Kreises fällt mit dem Mittelpunkt des Rahmens zusammen. Dieser Mittelpunkt liegt im Ausgangszustand, in welchem der Rahmen am Grundkörper arretierbar ist, über der Mitte der horizontalen Grundfläche am Grundkörper. Die Kugelrollen können auch in separaten Halterungen auf dem Kreisumfang angeordnet sein. Bevorzugt befinden sich die Kugelrollen in Vertiefungen an der Unterseite des plattenförmigen Rahmens.

Am Grundkörper ist ferner eine Bewegungsbegrenzungseinrichtung befestigt, die eine oder mehrere Anschlagflächen aufweist, an welche der Rahmen zu seiner horizontalen Bewegungsbegrenzung anlegbar ist. In bevorzugter Weise befindet sich die Bewegungsbegrenzungseinrichtung in der Mitte der horizontalen Grundfläche und ragt mit einem Anschlagbolzen in eine mittlere Öffnung am Rahmen. Die Bewegungsbegrenzungseinrichtung kann ferner eine Niederhalteplatte aufweisen, welche eine oder mehrere Anschlagflächen aufweist, durch die eine senkrecht zur horizontalen Grundfläche gerichtete Bewegung des Rahmens begrenzt wird.

Anhand der Figuren wird an einem Ausführungsbeispiel die Erfindung näher erläutert. Es zeigt:
- Fig. 1:: eine schnittbildliche Darstellung eines Ausführungsbeispiels; und
- Fig. 2:: in teilweise geschnittener Darstellung das Ausführungsbeispiel in einer Ansicht von oben.

Beim dargestellten Ausführungsbeispiel werden zwei Rollen 1 und 2 in paralleler Anordnung drehbar in einem als Drehteller ausgebildeten plattenförmigen Rahmen 5 gelagert. Der Rahmen 5 wird über Kugelrollen 7, z. B. aus Kunststoff oder Stahl an einer horizontalen Grundfläche 3 an einem Grundkörper 4 abgestützt. Der Grundkörper 4 ist ebenfalls als flache Platte ausgebildet.

Hierdurch erreicht man eine schwimmende Lagerung des Rahmens 5 am Grundkörper 4 in einer horizontalen Ebene. Auf die Rollen 1 und 2 kann ein Kraftfahrzeugrad, insbesondere ein Vorderrad eines Kraftfahrzeugs, zur Durchführung von Messungen, insbesondere Messungen der Radstellung am Kraftfahrzeug, aufgesetzt bzw. aufgefahren werden. An beiden Seiten des Rahmens 5 können hierzu schräge Flächen 14 vorgesehen sein, welche als Auffahrtschrägen zum erleichterten Auffahren des Rades auf die Rollen 1 und 2 dienen. Mit Hilfe von Arretierungen 12, z. B. vom Rahmen 5 in die Gurndplatte 4 ragenden Stiften, kann der Rahmen 5 beim Aufsetzen bzw. beim Auffahren eines Rades auf die Rollen 1 und 2 an der Grundplatte 4 arretiert werden. Beim Lösen der Arretierungen wird der Rahmen 5 in horizontaler Ebene schwimmend an der Grundplatte 4 abgestützt, wodurch eine Entlastung des auf die Rollen 1 und 2 aufgesetzten Rades in horizontaler Ebene erreicht wird.

Die Kugelrollen 7, welche die Rollkörper bilden, über welche der Rahmen 5 schwimmend an der ebenen horizontalen Grundfläche 3 abgestützt ist, können in Vertiefungen 13 an der Unterseite des Rahmens 5 angeordnet sein. Die Kugelrollen 7 befinden sich hierzu in Lagerungen, welche in entsprechende Ausnehmungen bzw. Vertiefungen 13 an der Unterseite des plattenförmigen Rahmens 5 angeordnet sind. Derartige Kugelrollen können an mehreren Stellen 15 auf einem Kreis um die Mitte 16 der Grundfläche 3 in einem Kugelkäfig oder in separaten Halterungen angeordnet sein.

Die Gesamtbauhöhe der Vorrichtung kann äußerst niedrig bemessen werden, beispielsweise auf ca. 45 mm. Der Durchmesser der Vorrichtung kann auf ca. 450 mm bemessen werden. Hieraus ergibt sich eine flexible Anwendung der transportabel ausbildbaren Vorrichtung in unterschiedlichen Meßanordnungen.

Für den Anschluß eines Drehantriebs kann eine der beiden Rollen, beispielsweise die Rolle 2, ein Anschlußstück 17, beispielsweise in Form eines Sechskantes aufweisen.

An der Grundplatte 4 ist beispielsweise durch eine Schraubverbindung 18 eine Bewegungsbegrenzungseinrichtung 6 befestigt. Die Bewegungsbegrenzungseinrichtung 6 besitzt in Form eines Anschlagbolzens 8 eine Anschlagfläche, welche senkrecht zur horizontalen Grundfläche 3 sich durch eine mittlere Öffnung 19 des Rahmens 5 erstreckt. Der Durchmesser des Anschlagbolzens 8 ist geringer als der Durchmesser der Öffnung 19. Am oberen Ende des Anschlagbolzens 8 ist eine Niederhalteplatte 10 befestigt mit einer waagerechten Anschlagfläche 9 an ihrer Unterseite. Durch diese Bewegungsbegrenzungseinrichtung 6 wird eine schwimmende Bewegung des Rahmens 5 gegenüber der Grundplatte 4 innerhalb eines begrenzten Bereiches zugelassen. Dieser Bereich ist so bemessen, daß eine Entlastung des auf die Rollen 1 und 2 aufgestellten Kraftfahrzeugrades für die in der Praxis vorkommenden Radstellungen während des Meßvorganges erreicht wird. Die Bewegungsbegrenzungseinrichtung 6 befindet sich in einer Vertiefung 20 zwischen den beiden Rollen 1 und 2 in der Mitte des Rahmens 5. Die Vertiefung 20 sowie die Höhe der Bewegungsbegrenzungseinrichtung 6 sind so bemessen, daß jeweilige Kraftfahrzeugradtypen unbehindert auf die Rollen 1 und 2 abgesetzt werden können. Durch die Niederhalteplatte 10 wird ein unbeabsichtigtes Lösen des Rahmens 5 von der Grundplatte 4 verhindert.

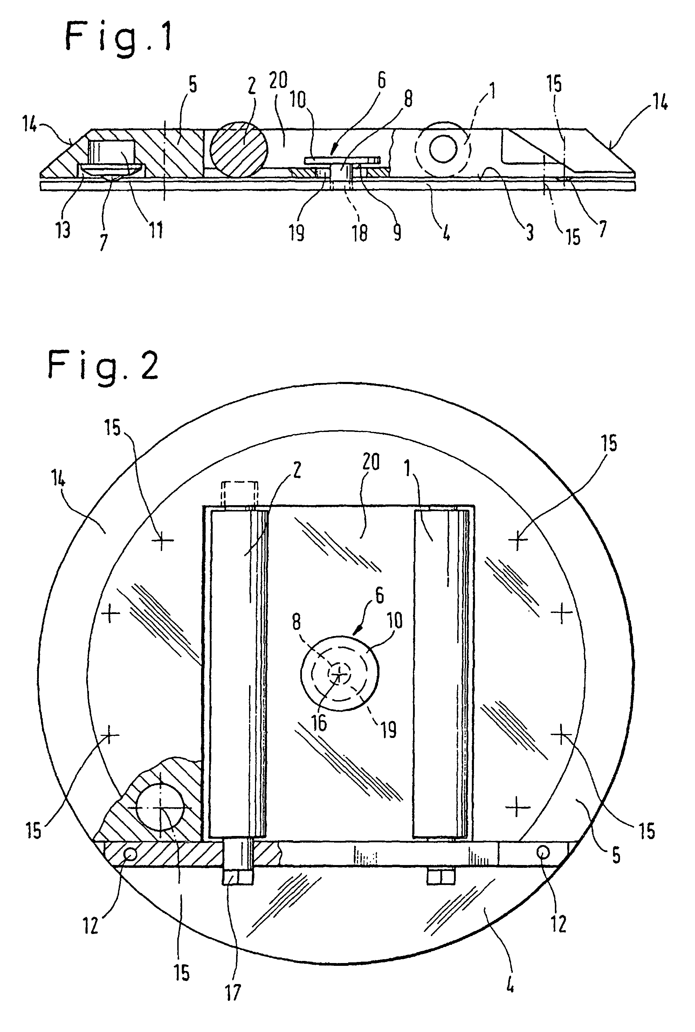

Wie insbesondere aus der Fig. 1 zu ersehen ist, wird beim Ausführungsbeispiel zur Erzielung einer flachen Bauhöhe der Gesamtanordnung ausgenützt, daß die Rollen 1 und 2 für ihren Einsatz als Aufstandsflächen des zu messenden Rades einen bestimmten Durchmesser, beispielsweise 40 mm, aufweisen. Unter Voraussetzung dieser ohnehin erforderlichen Bauhöhe werden die Kugelrollen 7 in Draufsicht an festen Positionen 15 des Rahmens 5, vorzugsweise in Vertiefungen 13, angeordnet, die neben den Rollen 1 und 2 liegen. Die Kugelrollen 7 können hierzu in einem Kugelkäfig oder in gesonderten Kugelhalterungen 11 angeordnet sein. Die Kugelrollen 7 besitzen einen Durchmesser von etwa 22 mm und ragen nur geringfügig, beispielsweise etwa 2 - 5 mm, insbesondere 3mm, über die Unterseite des Rahmens 5 hinaus, so daß die gewünschte schwimmende Lagerung an der Grundfläche 3 erzielt wird. Der Abstand zwischen der Unterseite des plattenförmigen Grundkörpers 4 und der Oberseite des plattenförmigen Rahmens 5 beträgt ca. 45 mm. Der Abstand der Achsen der beiden Rollen 1 und 2 voneinander kann ca. 150 mm betragen.

Aufgrund der in der horizontalen Ebene praktisch kräftefreien Lagerung des Kraftfahrzeugrades auf den Rollen 1 und 2 gegenüber dem Untergrund können Messungen, welche eine Drehung des angehobenen Rades erfordern, z. B.die Messung eines Felgenschlages durchgeführt werden, ohne daß das Kraftfahrzeugrad wie bisher üblich angehoben werden muß.

Auch die Messung der Radstellung im Hinblick auf Spur, Sturz und dergl. kann an dem auf die Rollen 1 und 2 aufgesetzten Rad mit Hilfe herkömmlicher Meßeinrichtungen durchgeführt werden.

## Patentansprüche

1. Vorrichtung zur Lagerung von zwei parallel in einem Rahmen (5) drehbar gelagerten Rollen (1,2), auf die ein Kraftfahrzeugrad in einer Meßanordnung, insbesondere zur Messung seiner Radstellung an einem Fahrzeug, aufsetzbar ist, mit einer Rollkörper (7) aufweisenden Lagereinrichtung für eine schwimmende Lagerung des Rahmens (5) in einer horizontalen Ebene an einem Grundkörper (4), wobei die Rollkörper (7) am Rahmen (5), an welchem die beiden Rollen (1,2) gelagert sind, in festen Positionen angeordnet sind und der Rahmen (5) über die Rollkörper (7) an einer ebenen horizontalen Grundfläche (3), welche am Grundkörper (4) vorgesehen ist, abgestützt ist und mit einer Anschlagflächen aufweisenden Bewegungsbegrenzungseinrichtung (6), durch welche die schwimmende Bewegung des Rahmens (5) in der horizontalen Ebene begrenzbar ist,
**dadurch gekennzeichnet,**
**daß** die Bewegungsbegrenzungseinrichtung (6) am Grundkörper (4) befestigt ist und wenigstens eine weitere Anschlagfläche (9) aufweist, durch die eine senkrecht zur horizontalen Grundfläche (3) gerichtete Bewegung des Rahmens (5) begrenzt ist.

2. Vorrichtung nach Anspruch 1, **dadurch gekennzeichnet, daß** der Rahmen (5) am Grundkörper (4) arretierbar ist.

3. Vorrichtung nach Anspruch 1, **dadurch gekennzeichnet, daß** die insbesondere als Rollkugeln ausgebildeten Rollkörper (7) aus Kunststoff oder Stahl bestehen.

4. Vorrichtung nach einem der Ansprüche 1 bis 3, **dadurch gekennzeichnet, daß** der Grundkörper (4) mit dem daran über die Rollkörper (7) abgestützten Rahmen und den Rollen (1, 2) eine transportable Einheit bildet.

5. Vorrichtung nach einem der Ansprüche 1 bis 4, **dadurch gekennzeichnet, daß** die Rollkörper (7) auf einem Kreis am Rahmen (5) angeordnet sind.

6. Vorrichtung nach einem der Ansprüche 1 bis 5, **dadurch gekennzeichnet, daß** die Rollkörper (7) in Vertiefungen (13) neben den Rollen (1, 2) an der Unterseite des Rahmens (5) befestigt sind.

7. Vorrichtung nach Anspruch 1, **dadurch gekennzeichnet, daß** die Bewegungsbegrenzungseinrichtung (6) in der Mitte der Grundfläche (3) angeordnet ist.

8. Vorrichtung nach Anspruch 7, **dadurch gekennzeichnet, daß** die Bewegungsbegrenzungseinrichtung (6) einen durch eine mittlere Öffnung (19) des Rahmens (5) ragenden Anschlagbolzen (8) aufweist, an welchem eine Niederhalteplatte (10) mit der wenigstens einen weiteren Anschlagfläche (9) befestigt ist.

9. Vorrichtung nach einem der Ansprüche 1 bis 8, **dadurch gekennzeichnet, daß** am Umfang des Rahmens (5) bevorzugt an diametralen Stellen Auffahrtsschrägen (14) vorgesehen sind.

10. Vorrichtung nach einem der Ansprüche 1 bis 9, **dadurch gekennzeichnet, daß** am auf den Rollen (1, 2) aufstehenden Kraftfahrzeugrad bei seiner Drehung ein Felgenschlag meßbar ist.

## Claims

1. Apparatus for mounting two rollers (1, 2) which are rotatably mounted parallel in a frame (5) and onto which a motor vehicle wheel can be placed in a measuring arrangement, in particular for measuring its wheel position on a vehicle, comprising a mounting device having rolling bodies (7) for floatingly mounting the frame (5) in a horizontal plane on a base body (4), wherein the rolling bodies (7) are arranged in fixed positions on the frame (5) on which the two rollers (1, 2) are mounted, and the frame (5) is supported by way of the rolling bodies (7) on a flat horizontal base surface (3) provided on the base body (4), and a motion-limiting device (6) which has abutment surfaces and by which the floating movement of the frame (5) in the horizontal plane can be limited,
**characterised in that**
the motion-limiting device (6) is fixed to the base body (4) and has at least one further abutment surface (9) by which a motion of the frame (5), which is directed perpendicularly to the horizontal base surface (3), is limited.

2. Apparatus according to claim 1 **characterised in that** the frame (5) can be arrested to the base body (4).

3. Apparatus according to claim 1 **characterised in that** the rolling bodies (7) which in particular are in the form of rolling balls comprise plastic material or steel.

4. Apparatus according to one of claims 1 to 3 **characterised in that** the base body (4) with the rollers (1, 2) and the frame supported thereon by way of the rolling bodies (7) forms a transportable unit.

5. Apparatus according to one of claims 1 to 4 **characterised in that** the rolling bodies (7) are arranged on a circle on the frame (5).

6. Apparatus according to one of claims 1 to 5 **characterised in that** the rolling bodies (7) are fixed in recesses (13) beside the rollers (1, 2) at the underside of the frame (5).

7. Apparatus according to claim 1 **characterised in that** the motion-limiting device (6) is arranged in the centre of the base surface (3).

8. Apparatus according to claim 7 **characterised in that** the motion-limiting device (6) has an abutment pin (8) which projects through a central opening (19) in the frame (5) and to which a hold-down plate (10) with the at least one further abutment surface (9) is fixed.

9. Apparatus according to one of claims 1 to 8 **characterised in that** inclined drive-on ramps (14) are provided on the periphery of the frame (5) preferably at diametral locations.

10. Apparatus according to one of claims 1 to 9 **characterised in that** a rim wobble can be measured on the motor vehicle when standing on the rollers (1, 2) upon rotation of the wheel.

## Revendications

1. Dispositif pour monter deux rouleaux (1, 2) parallèles, montés à rotation dans un bâti (5), sur lesquels une roue de véhicule peut être posée dans un équipement de mesure, en particulier pour mesurer la position de la roue sur un véhicule, comportant un ensemble de palier comprenant des éléments (7) roulants pour un montage flottant du bâti (5) dans un plan horizontal sur un corps (4) de base, les éléments (7) roulants étant disposés en des positions fixes sur le bâti (5) sur lequel sont montés les deux rouleaux (1, 2) et le bâti (5) étant soutenu par l'intermédiaire des éléments (7) roulants sur une surface (3) de base horizontale plane qui est prévue sur le corps (4) de base, et comportant un moyen (6) de limitation de mouvement, possédant des faces de butée, qui permet de limiter le mouvement flottant du bâti (5) dans le plan horizontal,
**caractérisé en ce que** le moyen (6) de limitation de mouvement est fixé sur le corps (4) de base et possède au moins une face (9) de butée supplémentaire, qui limite un mouvement du bâti (5) orienté perpendiculairement à la surface (3) de base horizontale.

2. Dispositif suivant la revendication 1, **caractérisé en ce que** le bâti (5) peut être immobilisé sur le corps (4) de base.

3. Dispositif suivant la revendication 1, **caractérisé en ce que** les éléments (7) roulants, réalisés notamment sous forme de roulettes, sont réalisés en matière plastique ou en acier.

4. Dispositif suivant l'une des revendications 1 à 3, **caractérisé en ce que** le corps (4) de base constitue une unité transportable avec le bâti qui s'appuie sur lui par l'intermédiaire des éléments (7) roulants et avec les rouleaux (1, 2).

5. Dispositif suivant l'une des revendications 1 à 4, **caractérisé en ce que** les éléments (7) roulants sont disposés sur un cercle sur le bâti (5).

6. Dispositif suivant l'une des revendications 1 à 5, **caractérisé en ce que** les éléments (7) roulants sont fixés dans des renfoncements (13) à côté des rouleaux (1, 2) sur le dessous du bâti (5).

7. Dispositif suivant la revendication 1, **caractérisé en ce que** le moyen (6) de limitation de mouvement est disposé au milieu de la surface (3) de base.

8. Dispositif suivant la revendication 7, **caractérisé en ce que** le moyen (6) de limitation de mouvement comprend un axe (8) de butée dépassant par une ouverture (19) centrale du bâti (5) et sur lequel est fixée une plaque (10) de maintien pourvue de ladite au moins une face (9) de butée supplémentaire.

9. Dispositif suivant l'une des revendications 1 à 8, **caractérisé en ce que** des rampes (14) d'accès sont prévues de préférence en des points diamétraux sur la périphérie du bâti (5).

10. Dispositif suivant l'une des revendications 1 à 9, **caractérisé en ce qu'**on peut mesurer sur la roue de véhicule posée sur les rouleaux (1, 2), lorsqu'elle tourne, un voile de jante.
